Europäisches Patentamt

European Patent Office

Office européen des brevets

(19)

(11) Publication number: **0 127 286**
**B1**

(12) **EUROPEAN PATENT SPECIFICATION**

(45) Date of publication of patent specification: **11.01.89**

(51) Int. Cl.⁴: **G 01 N 21/25**

(21) Application number: **84302094.2**

(22) Date of filing: **28.03.84**

(54) A photometric light absorption measuring type biochemical analysing apparatus.

(30) Priority: **29.03.83 JP 54674/83**

(43) Date of publication of application:
**05.12.84 Bulletin 84/49**

(45) Publication of the grant of the patent:
**11.01.89 Bulletin 89/02**

(84) Designated Contracting States:
**DE FR GB IT NL**

(56) References cited:
**US-A-2 394 129**
**US-A-3 141 094**
**US-A-3 554 654**
**US-A-4 313 735**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Minekane, Tomiharu c/o Patent Division**
**Tokyo Shibaura Denki K.K. Toshiba Building**
**1-1, Shibaura Minato-ku Tokyo (JP)**

(74) Representative: **Shindler, Nigel et al**
**BATCHELLOR, KIRK & EYLES 2 Pear Tree Court**
**Farringdon Road**
**London EC1R 0DS (GB)**

Courier Press, Leamington Spa, England.

## Description

This invention relates to a photometric light absorption type biochemical analysis apparatus and in particular to an improved apparatus having high flexibility for its light path design.

Photometric light absorption measurements are normally made by irradiating the transparent reaction cuvette containing a liquid sample to be analysed and by detecting the intensity of the light transmitted through the sample.

Automatic biochemical analysing apparatus of this type usually includes a temperature control bath unit for keeping reaction cuvettes at a predetermined temperature. The conventional temperature control bath unit is constructed so that a single line of successive sample cuvettes moves across the light path, through the water contained in the bath unit.

Thus, the light is directed onto the reaction cuvette in the bath unit through an entrance window portion provided on a side-wall of the bath unit, the light beam transmitted through the sample is then directed onto an exit window provided on the opposite side-wall of the bath unit, and the transmitted light is then separated into its spectral components to determine the concentration of the sample.

In such conventional apparatus, of this kind, means for directing the light beam, such as prisms, are disposed at either side of the position of the bath unit so as to enable the bath unit to be positioned therebetween.

One reason for this arrangement is the difficulty of obtaining sufficient transmitted light intensities when the prism means are directly immersed in the water in the bath unit due to the rather small difference between the refractive index of the prism and that of the water. In order to use a prism in water, it is possible to provide a reflective metal coating on the reflection surface of the prism. However problems of corrosion of the metal coating then tends to occur because a surface-active agent is usually added to the temperature controlled water in order to prevent attachment of bubbles onto the surfaces of the reaction cuvettes, and antifreeze agents also are sometimes added.

As a consequence, in the conventional apparatus, the prisms are usually positioned outside of the bath unit adjacent the side wall windows.

In such a conventional apparatus, it is impossible to measure simultaneously along a plurality of parallel sample lines extending between the side-wall windows of the temperature control bath unit. Further it is impossible to make a compact apparatus which is capable of simultaneously measuring a number of samples moving in parallel in the water.

European Patent Application No. 83110224.9 having the priority date 15.10.82, filed 13th October 1983 and published on 30th May 1984 under No. 01 09 536, belonging to the present applicants, discloses a light absorption measurement apparatus in which reaction cuvettes are moved through a constant-temperature bath so as to pass through measuring stations comprising beam paths defining members including mirrors or prisms, which are immersed in the bath.

The present invention seeks to provide new and improved biochemical analysis apparatus of the photometric light absorption measuring type, which can obtain sufficient transmitted light intensities through water.

The invention also seeks to provide apparatus which is adaptable for light absorption measurement and which provides sufficient flexibility to admit a plurality of light paths into the temperature control bath unit.

The invention also seeks to provide a new apparatus for biochemical analysis by photometric light absorption which enables simultaneous measurements along a number of parallel sample lines in the temperature controlled water, and which provides high speed and high reliability.

In accordance with the present invention, there is provided apparatus for photometric light absorption measurement of liquid samples contained in successive reaction cuvettes the apparatus including a temperature control bath unit with at least one light beam directing means having at a layer of light reflection material and a layer of anti-corrosion material coated on a surface thereof, so that it can be immersed in water.

Some embodiments of the invention will now be described by way of example with reference to the accompanying drawings wherein:

Figure 1 shows a sectional view of the light measuring section of the apparatus of one embodiment of the present invention;

Figures 2 and 3 are partly sectioned views of other embodiments of light beam directing means which may be used in the apparatus; and

Figure 4 is a partially sectioned perspective view of one embodiment of apparatus for simultaneous measuring of a plurality of samples.

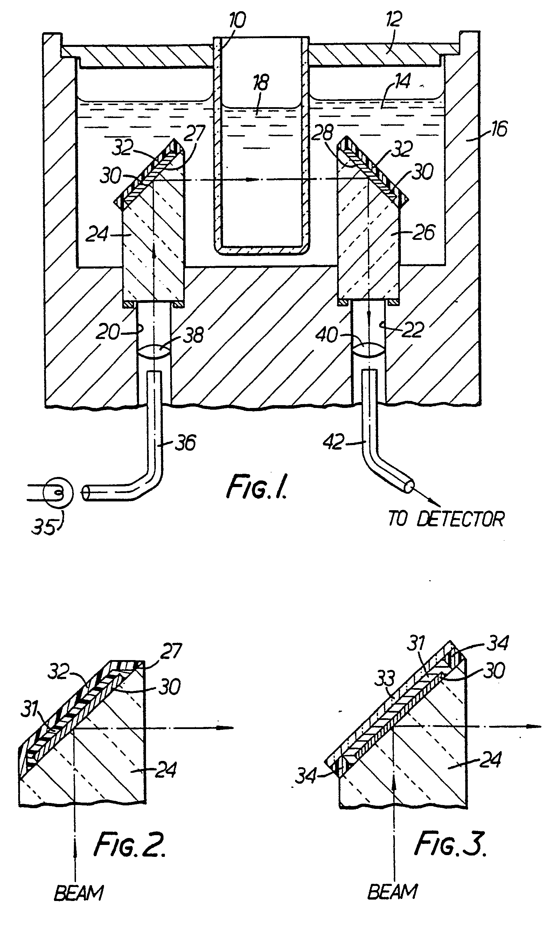

Referring now to Figure 1, a plurality of reaction cuvettes 10 are supported on a moving carrier or cassette 12 so as to pass through a temperature controlled liquid 14, such as water, in a temperature control bath unit 16.

Each cuvette 10 contains a liquid sample 18 to be analysed which is partly immersed into the water 14 to maintain the sample 18 at a predetermined reaction temperature.

The support cassette 12 is intermittently moved so as to bring the sample cuvette 10 to a light intensity measuring station which is provided at a predetermined position or plurality of positions of the bath unit. The measuring station includes at least one pair of windows 20 and 22 at the bottom portion of the bath unit 16.

In the respective window portions, light beam directing prisms 24 and 26 are provided. The reflection planes 27 and 28 of the respective prisms 24 and 26 are arranged facing each other to define a light path therebetween. Each prism has at least two layers 30 and 32 coated on its respective reflective surface 27 or 28.

The first layer 30 is of light reflective material, such as aluminium (Al) and the second layer 32 is of corrosion resistant material, such as titanium (Ti), chromium (Cr), chlorine (Cl) or silicon (Si). The oxide forms the above materials are preferably, such as titanium dioxide ($TiO_2$), chromium dioxide ($CrO_2$), silicon oxide (SiO) or silicon dioxide ($SiO_2$).

Since the corrosion resistant layer 32 covers the first layer 30, no corrosion of the aluminium layer occurs even when the prism means are immersed in water containing a surface-active agent. Consequently, the reflection surfaces can maintain sufficient light transmission efficiency.

The light beam emitted from a light source 35 is guided to the light entrance window 20 of the bath unit 16 by an optical fibre 36 and directed onto the first prism 24 through a focussing lens 38. The light beam entering the first prism 24 has its path changed so as to irradiate the sample cuvette 10 passing between the prisms. The transmitted light beam emerging from the sample 18 again has its path deflected at the reflective surface 28 of the second prism 26 provided in the light exit window 22 of the bath unit 26.

The transmitted light beam is guided to a detector means (not shown) through a focussing lens 40 and an optical fibre 42.

By means of this construction, the prisms 24 and 26 can be immersed in the water without losing their light transmission efficiency. In this way, the apparatus can be made a compact size since the light passing windows can be provided at the bottom.

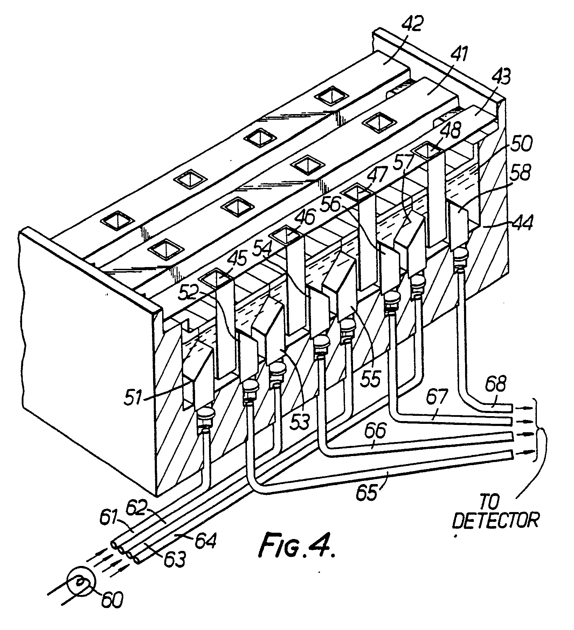

Figures 2 and 3 show other embodiments of the prism structures. In Figure 2, a light reflective thin layer 30, such as aluminium (Al) is deposited on the reflection surface of a prism body 24. Moreover, double thin layers 31 and 32 of different corrosion resistant materials are deposited covering the aluminium layer 30.

For example, layer 31 is of chromium (Cr) or chlorine (Cl) and the top layer 32 is of titanium (Ti).

To prevent a direct chemical reaction between the aluminium and the titanium, the buffer layer of chromium or chlorine is interposed therebetween.

Figure 3 depicts another embodiment similar to that of Figure 2, but in this case a corrosion resistant material 31 is coated over the aluminium layer 30 and further a thin glass plate 33 is fixed over them by means of an epoxy adhesive 34.

It is thus possible to construct an apparatus which can perform a simultaneous measurement of a number of samples as shown in Figure 4.

Successive carriers or cassette holders 43, 41 and 42, for example, intermittently run along a temperature control bath unit 44. Each cassette holds a plurality of sample cuvettes 45, 46, 47 and 48 each containing samples to be analysed. The cuvettes are partially immersed in the water 50 contained in the bath unit 44.

A plurality of prism pairs are provided at each light measuring station in the bath unit. In the embodiment, four pairs of prisms are provided for simultaneously measuring four samples. These pairs of prisms 51 and 52, 53 and 54, 55 and 56, 57 and 58 are respectively positioned so as to define four light measuring paths.

Light beam emitted from a light source 60 is directed on a plurality of optical guides 61, 62, 63 and 64 which are connected to the respective light entrance windows at the bottom portion of the path unit 44 so as to irradiate simultaneously the prisms 51, 53, 55 and 57 through the respective focussing lenses.

The light beams are reflected at the respective light reflective surfaces of the prisms in order to simultaneously irradiate the sample cuvettes 45, 46, 47 and 48. The transmitted light beams pass through the respective light exit windows through the prisms 52, 54, 56 and 58. Further, the transmitted beams are directed to a detector means (not shown) for determining the respective absorption of the samples through a plurality of optical guides 65, 66, 67 and 68. Each prism is, of course, constructed as shown in Figures 1, 2 and 3. As apparent from Figure 4, the simultaneous measurement of plural samples can be achieved by a compact apparatus.

In another embodiment of the simultaneous measuring apparatus (not shown), instead of the pairs of prisms being separate, they may be integrally constructed in a U-shape. Other details are substantially the same as shown in Figure 4. Each prism has a pair of light reflection surfaces and on which at least two layers, respectively of light reflective and corrosion resistant materials, are deposited.

Instead of the light paths being aligned as in Figure 4 they may be staggered to achieve a simultaneous measurement of plural samples in a much more compact apparatus than the apparatus shown in Figure 4.

Specifically formed prisms will then be required having two light reflection surfaces of different inclinations with each other, so that each light path is staggered relative to the neighbouring paths. Using this staggered light path construction, simultaneous measurements can be performed in a compact apparatus.

## Claims

1. A biochemical analysis apparatus comprising:

a light source (35) for supplying a light beam to a reaction cuvette (10) which contains a liquid sample (18) and is supported by a cassette holder (12) which is movable through a temperature controlled bath unit (16);

said bath unit (16) including at least one light entrance window (20) and a corresponding exit window (22) at the bottom portion thereof;

light beam directing means (24, 26) arranged at respective entrance and exit windows of said bath unit (16);

said light beam directing means (24, 26) comprising a light reflection surface (27, 28) having at least a first thin layer (30) of light reflective material and at least one second thin layer (32) of corrosion resistant material covering said first layer (30); and

a detector means for receiving the transmitted light through said light exit window (22) of said bath unit (16).

2. A biochemical analysis apparatus according to claim 1 wherein:

said light reflective material is aluminium, and said corrosion resistant material is titanium, chromium, chlorine or silicon.

3. A biochemical analysis apparatus according to claim 1 or claim 2 wherein, said light beam directing means includes a light reflective layer (30) and two layers (31, 32) of different corrosion resistant material covering said light reflective material.

4. Apparatus according to claim 3 wherein, said two layers (31, 32) comprise a buffer layer of chromium or chlorine and a top covering layer of titanium.

5. Apparatus according to claim 3 wherein, said light beam directing means includes a light reflective layer (30), a buffer layer (31) of corrosion resistant material and a glass plate (33) adhesively fixed thereon.

6. A biochemical analysis apparatus for simultaneously measuring a number of samples, comprising:

a plurality of cuvette holders (43, 41, 42) movable along a temperature controlled bath unit (44), each supporting a plurality of sample cuvettes (45—48) partly immersed in water contained in said bath unit,

a plurality of light beam directing means (51—58) positioned in said bath unit (44), each including a light reflective layer and at least one corrosion resistant layer thereon, and

a light source (60) for emitting a light beam which simultaneously irradiates said samples by means of said plurality of light beam directing means (51—58).

7. Apparatus according to claim 6 wherein, said light beam directing means (51—58) directs light in a U-shaped path.

8. Apparatus according to claim 6 wherein, each of said light beam directing means (51—58) includes two oppositely angled light reflection surfaces so as to constitute a plurality of staggered light paths.

**Patentansprüche**

1. Biochemisches Analysegerät

mit einer Lichtquelle (35), die einen Lichtstrahl auf eine Reaktionsküvette (10) sendet, welche eine Flüssigkeitsprobe (18) enthält und von einem Kassetenhalter (12) gehalten wird, der durch eine temperaturgesteuerte Badeinheit (16) bewegbar ist,

wobei die Badeinheit (16) wenigstens ein Lichteintrittsfenster (20) und ein entsprechendes Austrittsfenster (22) am Boden aufweist,

mit Lichtstrahllenkungsmitteln (24, 26), die am Eintritts- und Austrittsfenster der Badeinheit (16) angeordnet sind,

wobei die Lichtstrahllenkungsmittel (24, 26) eine Lichtreflexionsfläche (27, 28) mit wenigstens einer ersten dünnen Schicht (30) aus Licht reflektierendem Material und wenigstens eine zweite dünne Schicht (32) aus korrosionsbeständigem Material aufweisen, die die erste Schicht (30) überdeckt, und

mit einem Detektor zum Empfang des durch das Lichtaustrittsfenster (22) der Badeinheit (16) hindurchtretenden Lichtes.

2. Biochemisches Analysegerät nach Anspruch 1, bei dem das Licht reflektierende Material Aluminium und das korrosionsbeständige Material Titan, Chrom, Chlor oder Silizium ist.

3. Biochemisches Analysegerät nach Anspruch 1 oder 2, bei dem die Lichtstrahllenkungsmittel eine Licht reflektierende Schicht (30) und zwei Schichten (31, 32) aus unterschiedlichem korrosionsbeständigen Material aufweisen, die das Licht reflektierende Material überdecken.

4. Gerät nach Anspruch 3, bei dem die zwei Schichten (31, 32) eine Pufferschicht aus Chrom oder Chlor und eine Deckschicht aus Titan umfassen.

5. Gerät nach Anspruch 3, bei dem die Lichtstrahllenkungsmittel eine Licht reflektierende Schicht (30), eine Pufferschicht (31) aus korrosionsbeständigem Material und eine darauf aufgeklebte Glasplatte (33) aufweisen.

6. Biochemisches Analysegerät zur gleichzeitigen Untersuchung einer Zahl von Proben mit einer Vielzahl von Küvettenhaltern (43, 41, 42), die entlang einer temperaturgesteuerten Badeinheit (44) bewegbar sind und die jeweils eine Vielzahl von Probenküvetten (45—48) tragen, die teilweise in das in der Badeinheit enthaltene Wasser eintauchen,

einer Vielzahl von Lichtstrahllenkungsmitteln (51—58), die in der Badeinheit (44) angeordnet sind und jeweils eine Licht reflektierende Schicht und wenigstens eine darauf befindliche korrosionsbeständige Schicht aufweissen, und

einer Lichtquelle (60) zur Abgabe eines Lichtstrahles, der gleichzeitig die Proben mit Hilfe der Vielzahl von Lichtstrahllenkungsmitteln (51—58) bestrahlt.

7. Gerät nach Anspruch 6, bei dem die Lichtstrahllenkungsmittel (51—58) Licht entlang eines U-förmigen Weges lenken.

8. Gerät nach Anspruch 6, bei dem jedes der Lichtstrahllenkungsmittel (51—58) zwei gegenwinklig angeordnete Licht reflektierende Flächen aufweist zur Bildung einer Vielzahl von gestaffelten Lichtwegen.

**Revendications**

1. Analyseur biochimique qui comprend:

une source de lumière (35) qui dirige un faisceau lumineux vers une cuvette de réaction (10) qui contient un échantillon de liquide (18) et qui est supportée par une cassette (12) pouvant être déplacé dans un dispositif de bain (16) dont la température est contrôlée ou réglée;

ledit dispositif de bain (16) comportant, au moins, une fenêtre (20) pour l'entrée de la lumière et une fenêtre de sortie de lumière correspondante (22) à sa base;

des moyens (24, 26) pour diriger la lumière montés respectivement aux fenêtres d'entrée et de sortie correspondantes dudit dispositif de bain (16);

lesdits moyens de direction de la lumière (24, 26) comportant une surface réfléchissant la lumière (27, 28) comprenant, au moins, une première mince couche (30) de matière réfléchissant la lumière, et, au moins, une seconde couche mince (32) de matière résistante à la corrosion couvrant ladite première couche (30); et

un détecteur pour recevoir la lumière transmise par ladite fenêtre de sortie (22) du dispositif de bain (16).

2. Analyseur biochimique selon la revendication 1, caractérisé en ce que ladite matière réfléchissant la lumière est l'aluminium, tandis que la matière résistante à la corrosion est le titane, le chrome, le chlore ou le silicium.

3. Analyseur biochimique selon la revendication 1 ou 2, caractérisé en ce que les moyens pour diriger le faisceau lumineux comprennent une couche réfléchissant la lumière (30) et deux couches (31 et 32) de matières résistantes à la corrosion différentes couvrant ladite couche réfléchissante.

4. Analyseur biochimique selon la revendication 3, caractérisé en ce que les deux couches en question comprennent une couche-tampon de chrome ou de chlore et une couche de couverture en titane.

5. Analyseur biochimique selon la revendication 3, caractérisé en ce que les moyens pour diriger la lumière comprennent une couche réfléchissante (30), une couche-tampon (31) de matière résistant à la corrosion, et une plaquette de verre (31) collée sur celle-ci.

6. Analyseur biochimique pour analyser simultanément un certain nombre d'échantillons, qui comprend:

un certain nombre de porte-cuvettes (41, 42, 43) pouvant se mouvoir dans un dispositif de bain à température contrôlée ou réglée (44), dont chacun supporte un certain nombre de cuvettes à échantillons (45, 48) partiellement immergées dans l'eau contenue dans ledit dispositif de bain;

un certain nombre de moyens pour diriger un faisceau lumineux (51, 58) placés dans ledit dispositif de bain (44), dont chacun comprend une couche réfléchissant la lumière et, au moins, une couche résistant à la corrosion sur cette dernière, et

une source (60) qui émet un faisceau de lumière qui irradie simultanément lesdits échantillons grâce à des moyens dirigeant ledit faisceau lumineux.

7. Analyseur biochimique selon la revendication 6, caractérisé en ce que les moyens (51, 58) prévus pour diriger ledit faisceau lumineux dirigent celui-ci le long d'un trajet en U.

8. Analyseur biochimique selon la revendication 6, caractérisé en ce que les moyens (51—58) pour diriger ledit faisceau lumineux comprennent deux surfaces réfléchissant la lumière orientées suivant des directions angulaires opposées afin de produire plusieurs trajets décalés ou étagés pour le faisceau lumineux.

*Fig. 1.*

TO DETECTOR

*Fig. 2.*

BEAM

*Fig. 3.*

BEAM

1

EP 0 127 286 B1

Fig.4.

TO DETECTOR

2